# EUROPÄISCHE PATENTSCHRIFT

(11) **EP 3 301 770 B1**
(45) Veröffentlichungstag und Bekanntmachung des Hinweises auf die Patenterteilung: **30.11.2022**
(21) Anmeldenummer: 16192000.4
(22) Anmeldetag: 01.10.2016
(51) Int. Cl.: H02G 3/06

(54) **KABELVERSCHRAUBUNG**
CABLE CONNECTION
PRESSE-ÉTOUPE

(43) Veröffentlichungstag der Anmeldung: 04.04.2018
(73) Patentinhaber: Lapp Engineering AG, 6330 Cham (CH)
(72) Erfinder: Charcenko, Valerij, 76701 Kromeriz (CZ); Jurak, Marek, 76001 Zlín (CZ)
(74) Vertreter: Rutz & Partner

(56) Entgegenhaltungen:
- EP-A1- 0 551 664
- EP-A2- 2 107 657
- DE-A1- 10 005 682
- DE-U1-202010 006 132
- DE-U1-202012 008 619
- DE-U1-202012 012 427
- FR-A1- 2 856 203
- JP-A- H08 149 656
- US-A- 3 603 912

## Beschreibung

Die Erfindung betrifft eine Kabelverschraubung zur Durchführung eines Kabels durch eine Montageöffnung in einer Montagewand.

Kabelverschraubungen werden dazu genutzt, Kabel durch Wände und Gehäuse von elektrischen Schaltschränken, elektrischen Geräten und dergleichen hindurchzuführen. Zweck der Kabelverschraubung ist die Vermeidung von Beschädigungen des Kabels im Bereich der Durchführung sowie die zug- und druckfeste Befestigung des Kabels bezüglich der Montagewand.

Aus der EP0551664A1 ist eine Kabelverschraubung mit einem in einem Gehäuse angeordneten Lamellenkorb bekannt. Der Lamellenkorb ist durch eine Hutmutter, welche auf das Gehäuse aufschraubbar ist, beaufschlagbar, so dass die Lamellen des Lamellenkorbs einen Dichtring gegen ein durchgeführtes Kabel pressen. Nachteilig an dieser Lösung ist, dass die Lamellen aufgrund ihrer feinen Struktur abbrechen können. Ferner ist die Stabilität der Führung des Kabels durch die Kabelverschraubung limitiert, insbesondere Kippbewegungen des Kabels bezüglich der Kabelverschraubung können zu einer eingeschränkten Dichtigkeit der Durchführung führen.

Aus der EP2107657A2 ist eine Kabelverschraubung mit zwei sich in entgegengesetzte Richtungen erstreckenden Lamellenkörben bekannt. In jedem Lamellenkorb sitzt ein elastischer Dichtring, der durch den jeweiligen Lamellenkorb radial zur Mittelachse in Richtung des durchgeführten Kabels beaufschlagbar ist. Nachteilig an dieser Lösung ist die komplexe Struktur des doppelten Lamellenkorbs, was zu einem hohen Fertigungsaufwand führt. Zudem können die Lamellen aufgrund ihrer feinen Struktur abbrechen.

Aus der DE202012012427U1 ist eine Kabelverschraubung mit einem Dichteinsatz bekannt, welcher durch eine auf dem Grundkörper aufschraubbare Druckschraube beaufschlagbar ist. Der Dichteinsatz ist drehbar im Grundkörper gelagert, so dass es beim Beaufschlagen des durchgeführten Kabels mit dem Dichteinsatz zu einem Verdrillen des Kabels kommen kann. Zudem ist die Beaufschlagung des Dichteinsatzes nicht homogen.

Aus der DE202012008619U1 ist eine Kabelverschraubung mit einem Gehäuse, einem Dichteinsatz und mit einer Überwurfmutter, die auf das Außengewinde des Gehäuses aufschraubbar ist, bekannt. Der Dichteinsatz ist so im Gehäuse gehalten, dass er nicht verdrehbar ist.

Aus der DE202010006132U1 ist eine Kabelverschraubung mit einem Gehäuse, einer damit verschraubbaren Schraubmutter und einem durch die Schraubmutter beaufschlagbaren Dichtelement bekannt. Das Dichtelement weist an der Aussenseite eine radial umlaufende Nut auf.

Aus der JPH08149656A ist eine Vorrichtung zur Durchführung von Schläuchen oder Rohren bekannt. Die Vorrichtung umfasst einen zylindrischen Grundkörper mit zwei darauf aufgeschraubten Überwurfmuttern. Ein Dichtelement ist im Grundkörper angeordnet.

Aus der US3603912A ist eine Kabelverschaubung mit einem Grundkörper, einer darauf aufschraubbaren Überwurfmutter und einem durch die Überwurfmutter beaufschlagbaren Dichtelement bekannt. Die Kabelverschraubung umfasst zudem ein benachbart zum Dichtelement angeordnetes Erdungselement.

Der Erfindung liegt daher die Aufgabe zu Grunde, eine verbesserte Kabelverschraubung zu schaffen.

Insbesondere ist eine Kabelverschraubung bereitzustellen, die eine möglichst gleichmässige radiale und longitudinale Klemmung eines durchgeführten Kabels ermöglicht.

Ferner ist eine Kabelverschraubung bereitzustellen, die eine Verdrillung des durchgeführten Kabels während der Installation vermindert oder gänzlich verunmöglicht.

Zudem soll die Kabelverschraubung für unterschiedliche Kabeldurchmesser geeignet sein und eine dichte Durchführung eines Kabels durch eine Trennwand ermöglichen.

Weiter ist eine Kabelverschraubung bereitzustellen, bei der keine Kompromisse hinsichtlich der Materialwahl getroffen werden müssen und alle Anforderungen des Anwenders optimal erfüllt werden können.

Diese Aufgabe wird mit einer Kabelverschraubung gelöst, welche die in Anspruch 1 angegebenen Merkmale aufweist. Vorteilhafte Ausgestaltungen der Erfindung sind in weiteren Ansprüchen angegeben.

Die Kabelverschraubung, die der Durchführung eines Kabels durch eine Montageöffnung in einer Montagewand, insbesondere einer Gehäusewand eines elektrischen Geräts oder eines elektrischen Schranks, dient, umfasst die Merkmale des Anspruchs 1, darunter einen hohlzylinderförmigen Montagestutzen,
- der einen der Durchführung des Kabels dienenden Stutzenkanal umfasst,
- der eine Schlüsselfläche zum Anlegen eines Werkzeugs umfasst,
- der wenigstens ein erstes Aussengewinde aufweist, mittels dessen eine Hutmutter, die eine der Durchführung des Kabels dienende Durchführungsöffnung aufweist, gehalten ist, und
- der im der Hutmutter zugewandten Endbereich eine vorzugsweise konische Abstützfläche aufweist, an die eine erste Druckfläche eines Dichtungsteils, das einen zur Durchführung des Kabels dienenden Aufnahmekanal aufweist, anliegt.

Erfindungsgemäss weist die Abstützfläche radial oder strahlenförmig verlaufende Strukturelemente auf, die der Erhöhung der Haft- und Gleitreibung zwischen der ersten Druckfläche des Dichtungsteils und der Abstützfläche des Montagestutzens dienen

. Durch die Erhöhung der Haft- und Gleitreibung wird ein gegenseitiges Verdrehen des Dichtungsteils und des Montagestutzens nach Durchführung eines Kabels während des Verschraubens der Hutmutter verhindert oder zumindest stark reduziert. Ein Verdrillen des Kabels während des Verschraubvorgangs wird somit verhindert oder zumindest stark reduziert, so dass das Kabel bzw. der Kabelmantel nicht lokal geschädigt wird.

Der Montagestutzen weist in einer besonders bevorzugten Ausgestaltung ein zweites Aussengewinde auf, mit welchem die Kabelverschraubung in einem Gewinde in einer Montagewand festschraubbar ist. Gegebenenfalls kann auch ein hinter der Montagewand angeordneter Montagering mit einem Innengewinde mit dem Montagestutzen verschraubt werden. In einer weiteren erfindungsgemässen Ausgestaltung sind am Montagestutzen Schnellverriegelungselemente, insbesondere Schnappelemente, zur Festlegung der Kabelverschraubung an einer Montagewand, angeordnet. Die Schnellverriegelungselemente hintergreifen zumindest teilweise die Montagewand und stellen eine mechanisch stabile Festlegung der Kabelverschraubung an der Montagewand sicher.

Erfindungsgemäss sind die Strukturelemente auf der Abstützfläche des Montagestutzens als Einformung, Ausformung, Rändelung, Wellen, Nuten, Riefen, Rillen, Schuppen und/oder Kuppen oder einer Kombination davon ausgestaltet.

Die Strukturelemente auf der Abstützfläche des Montagestutzens werden vorzugsweise durch ein Fräs-/, Ätz- und/oder Bohr-Verfahren in die Abstützfläche eingeformt und/oder sind durch ein Urformverfahren, vorzugsweise durch Spritzgiessen, am Montagestutzen angeformt. Die Herstellung der Strukturelemente ist somit schnell und kostengünstig.

In einer weiteren besonders bevorzugten Ausgestaltung sind die Abstützfläche und/oder die Strukturelemente auf der Abstützfläche zumindest teilweise mit einer haft- und/oder reibungserhöhenden Beschichtung und/oder mit einem Klebstoff überzogen. Die Erhöhung der Haft- und Gleitreibung auf der Abstützfläche bzw. den Strukturelementen auf der Abstützfläche wird hierdurch weiter erhöht, wodurch ein Verdrehen zwischen dem Dichtungsteil und dem Montagestutzen während des Verschraubens eines durchgeführten Kabels komplett verhindert oder zusätzlich stark reduziert wird.

Erfindungsgemäss weist die erste Druckfläche des Dichtungsteils zu den Strukturelementen auf der Abstützfläche komplementäre Formelemente auf. Die Formelemente auf der ersten Druckfläche können in die Strukturelemente auf der Abstützfläche eingreifen. Das Dichtungsteil wird dadurch auf der Abstützfläche weitgehend verdrehsicher gelagert.

Erfindungsgemäss weist das Dichtungsteil auf der der ersten Druckfläche gegenüberliegenden Seite eine zweite Druckfläche auf, welche durch die Hutmutter beaufschlagbar ist. Das Dichtungsteil ist vorzugsweise aus einem elastischen Material wie Gummi geformt. Durch Aufschrauben der Hutmutter auf das erste Aussengewinde am Montagestutzen wird das Dichtungsteil auf der zweiten Druckfläche mechanisch beaufschlagt. Da die erste Druckfläche auf der Abstützfläche des Montagestutzens anliegt, führt die mechanische Beaufschlagung zu einer Deformierung des Dichtungsteils, wobei die Innenfläche des Dichtungsteils gegen die Kabelaussenfläche des durchgeführten Kabels gepresst wird.

In einer besonders bevorzugten Ausgestaltung weist die Innenfläche des Dichtungsteils zumindest ein, vorzugsweise mehrere, Anpresselemente auf, die radial oder ringförmig verlaufen. Die Anpresselemente verbessern die Anpressung der Innenfläche des Dichtungsteils gegen die Kabelaussenfläche. Durch die Anpresselemente entstehen auf der Innenfläche des Dichtungsteils feinere Strukturen als bei einer planaren Innenfläche. Diese feineren Strukturen weisen eine höhere Elastizität auf und können sich so besser an die Kabelaussenfläche des durchgeführten Kabels anpassen und eine gas- und flüssigkeitsdichte Verbindung eingehen. Die Anpresselemente erlauben es daher, Kabel mit unterschiedlichem Kabeldurchmesser dicht abschliessend zu halten. Die vorzugsweise elastischen Anpresselemente können dabei deformiert und/oder komprimiert werden.

Der Neigungswinkel der Abstützfläche bezüglich der Innenfläche des Montagestutzens beträgt vorzugsweise zwischen 20° und 75°, weiter bevorzugt zwischen 25° und 70°.

Die Hutmutter weist erfindungsgemäss eine konische Innenfläche auf, die geometrisch komplementär zur zweiten Druckfläche des Dichtungsteils ausgestaltet ist. Hierdurch wird die mechanische Beaufschlagung des Dichtungsteils verbessert und erfolgt gleichförmiger über die gesamte zweite Druckfläche.

In einer besonders bevorzugten Ausgestaltung ist die konische Innenfläche der Hutmutter mit einer reibungsmindernden Beschichtung überzogen. Hierdurch wird das reibungsarme Gleiten der konischen Innenfläche der Hutmutter auf der zweiten Druckfläche erhöht, so dass sich das Dichtungsteil während des Verschraubvorgangs, bei dem vorzugsweise die Hutmutter um die Längsachse der Kabelverschraubung gedreht wird, nicht dreht.

Der Neigungswinkel der konischen Innenfläche der Hutmutter bezüglich der Innenfläche der Hutmutter beträgt vorzugsweise zwischen 30° und 80°, weiter bevorzugt zwischen 40° und 75°.

In einer weiteren besonders bevorzugten Ausgestaltung ist der Neigungswinkel der konischen Innenfläche der Hutmutter bezüglich der Innenfläche der Hutmutter grösser als der Neigungswinkel der Abstützfläche bezüglich der Innenfläche des Montagestutzens. Dies führt zu einer verbesserten Anpressung der Innenfläche des Dichtungsteils an die Kabelaussenfläche des durchgeführten Kabels.

Das Dichtungsteil weist in einer besonders bevorzugten Ausgestaltung zumindest zwei oder mehrere Aufnahmekanäle zur Durchführung je eines Kabels auf. Mehrere Kabel können somit mit einer einzigen Kabelverschraubung gas- und flüssigkeitsdicht durch eine Montagewand durchgeführt werden. Die Aufnahmekanäle weisen identische oder unterschiedliche Durchmesser und Formen auf, so dass Kabel mit unterschiedlichen Durchmessern und Querschnitten durchführbar sind.

In einer weiteren bevorzugten Ausgestaltung weist das Dichtungsteil eine oder mehrere Aufnahmekanäle auf, in denen die Anpresselemente in Form eines Gewindes vorgesehen sind, welches erlaubt, mit einem Aussengewinde versehene Dichtungszapfen aufzunehmen, durch die der nicht genutzte Aufnahmekanal verschlossen wird. Der oder die Dichtungszapfen können daher bedarfsweise entfernt werden, um bei Bedarf ein Kabel durch die Kabelverschraubung hindurch zu führen. Erfindungsgemässe Kabelverschraubungen können daher prophylaktisch, hinsichtlich einer zukünftigen Verwendung bzw. Kabeldurchführung z.B. an einer Wand vormontiert werden, die weiterhin dicht abgeschlossen ist.

Nachfolgend wird die Erfindung anhand von Zeichnungen näher erläutert. Dabei zeigt:
- Fig. 1: eine an einer Wand 9 montierte erfindungsgemässe Kabelverschraubung 1;
- Fig. 2a: die Kabelverschraubung 1 von Fig. 1 in einer ersten Ausgestaltung außerhalb des Schutzumfangs der Ansprüche in Explosionsdarstellung;
- Fig. 2b: die Kabelverschraubung 1 von Fig. 2a mit einem Viertelschnitt in einer Explosionsdarstellung;
- Fig. 3: eine erfindungsgemässe Kabelverschraubung 1 in einer zweiten Ausgestaltung mit einem Viertelschnitt in partieller Explosionsdarstellung;
- Fig. 4: eine Seitenansicht mit einem Viertelschnitt durch die erfindungsgemässe Kabelverschraubung 1 aus Fig. 3, die an einer Montageöffnung 90 in einer Montagewand 9 angebracht ist und mittels eines Montagerings 6 gegen die Montagewand 9 gezogen wird mit einem schematisch dargestellten durchgeführten Kabel 8;

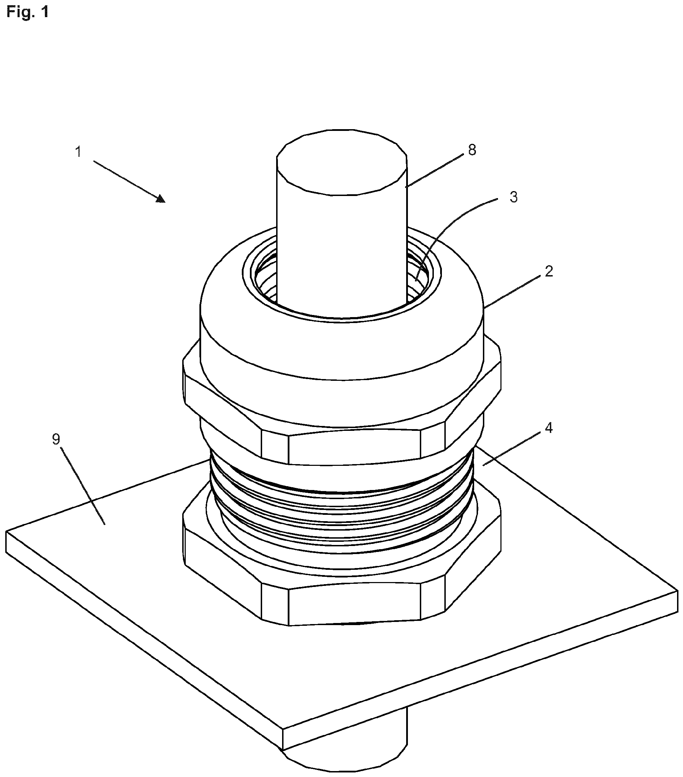

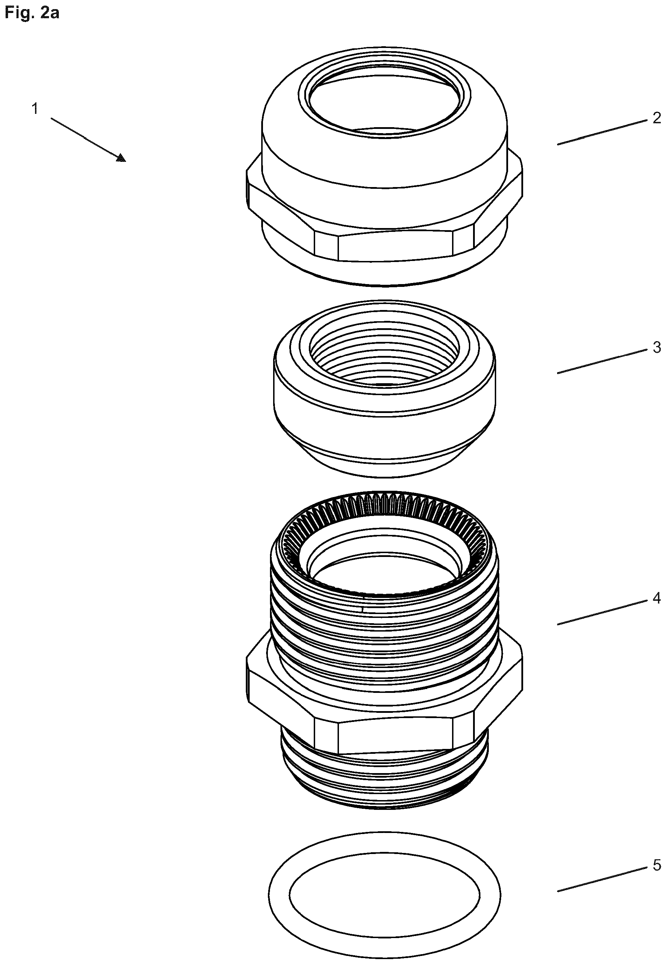

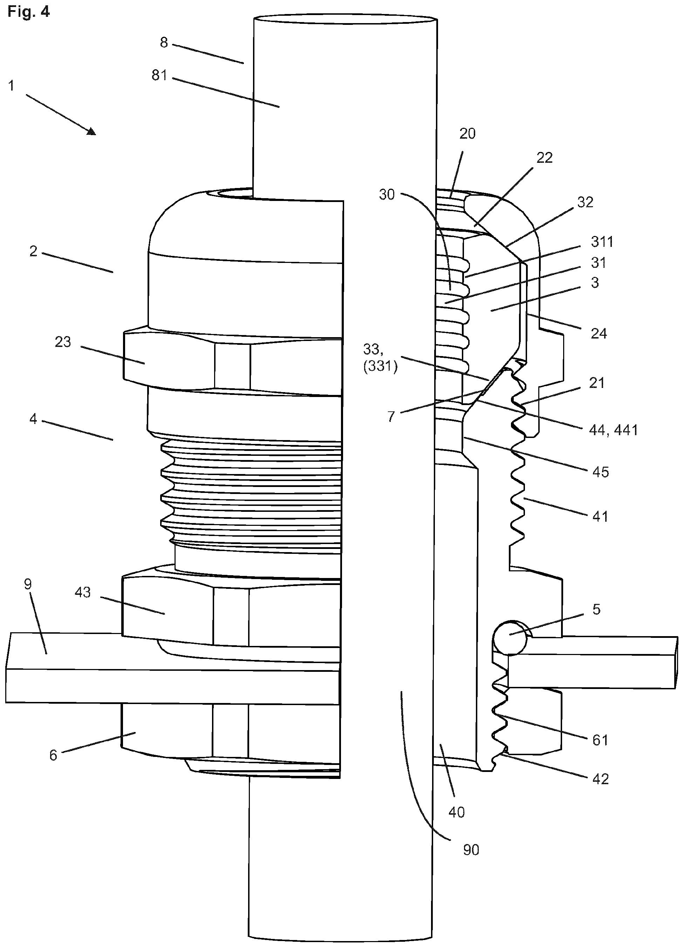

Fig. 1 zeigt eine an einer Wand 9 montierte erfindungsgemässe Kabelverschraubung 1 mit einer Hutmutter 2, einem Dichtungsteil 3 (siehe auch die Figuren 2a und 4), einem Montagestutzen 4 und einem Dichtungsring 5.

Fig. 2a zeigt die Kabelverschraubung 1 von Fig. 1 in einer ersten Ausgestaltung außerhalb des Schutzumfangs der Ansprüche in einer

Explosionsdarstellung mit der Hutmutter 2, dem Dichtungsteil 3, dem Montagestutzen 4 und dem Dichtungsring 5 in koaxialer Ausrichtung zueinander.

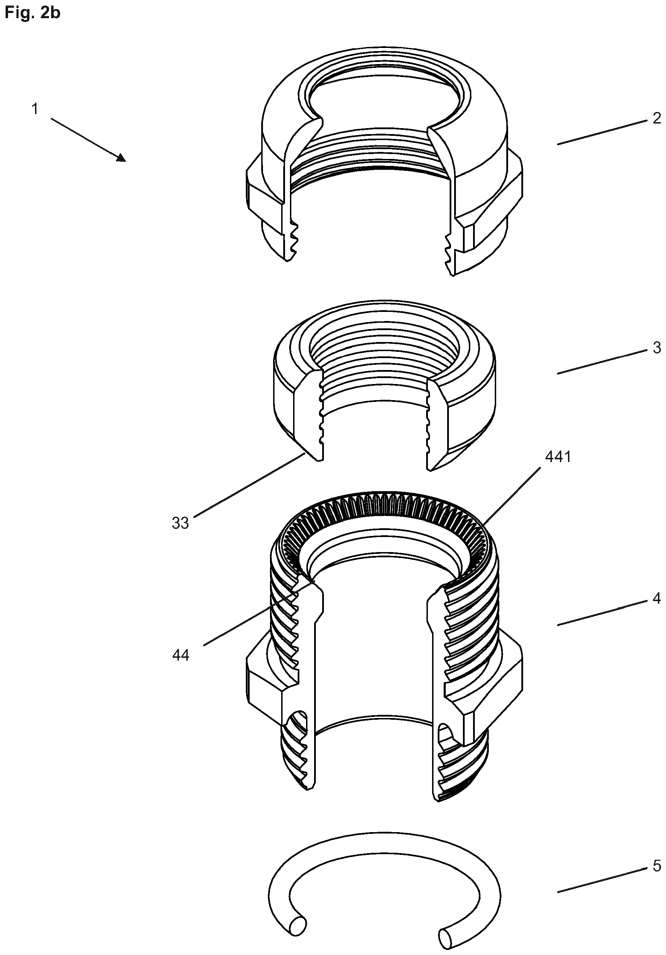

Fig. 2b zeigt die Kabelverschraubung 1 von Fig. 2a mit einem Viertelschnitt, der einen Einblick in die genannten Teile gewährt. Es ist gezeigt, dass das Dichtungsteil 3 auf der Unterseite eine erste konisch verlaufende Druckfläche 33 aufweist, die zu einer konisch verlaufenden Abstützfläche 441 an der Oberseite der Montagestutzens 4 korrespondiert. Die Abstützfläche 441 ist mit Strukturelementen 441 versehen, die ausgehend von einem zentralen Punkt radial oder strahlenförmig nach aussen verlaufen und mittels denen die Druckfläche 33 entsprechend deformiert wird, sobald das Dichtungselement 3 gegen den Montagestutzen 4 gepresst wird. Dabei resultieren in der Druckfläche 33 Formelemente, die zu den Strukturelementen 441 der Abstützfläche 441 korrespondieren.

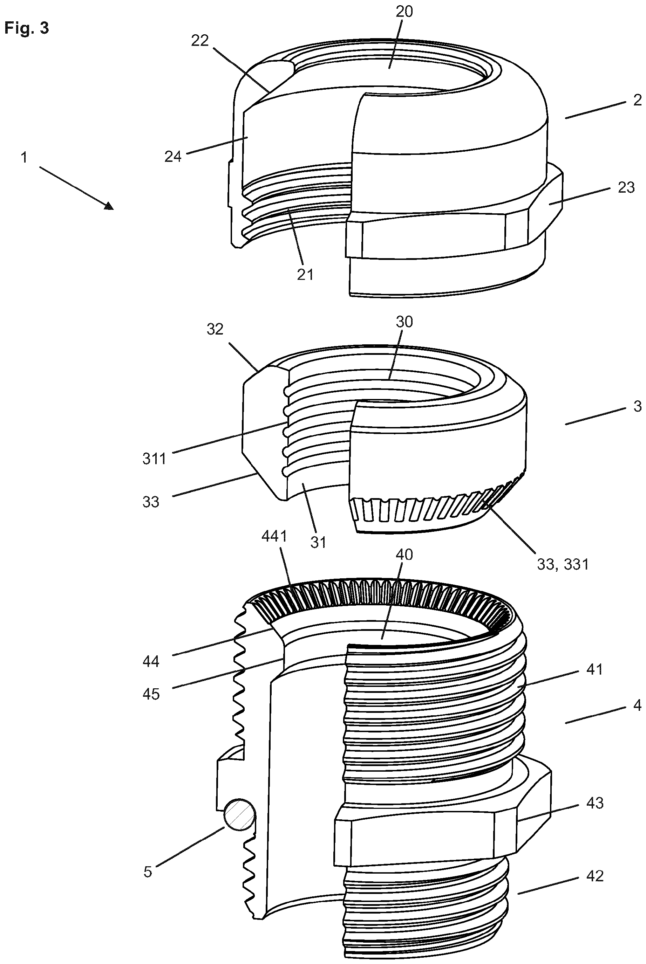

Fig. 3 zeigt eine erfindungsgemässe Kabelverschraubung 1 in einer bevorzugten Ausgestaltung mit einem Viertelschnitt, der Einblick in das Innere der Kabelverschraubung 1 gewährt. Die Hutmutter 2 und das Dichtungsteil 3 sind im unverschraubten Zustand gezeigt. Die Kabelverschraubung 1 umfasst wiederum einen Montagestutzen 4, einen Dichtungsring 5, ein Dichtungsteil 3 sowie eine Hutmutter 2. Der Montagestutzen 4 umfasst ein erstes Aussengewinde 41, auf das die Hutmutter 2 aufschraubbar ist. Auf der gegenüberliegenden Seite weist der Montagestutzen 4 ein zweites Aussengewinde 42 auf, welches dazu dient, die Kabelverschraubung 1 an einer Montagewand 9 festzuschrauben. An der Aussenseite des Montagestutzens 4 ist eine Schlüsselfläche 43 angeformt, an die ein Werkzeug, insbesondere ein Schraubenschlüssel, formschlüssig anlegbar ist. Zur Durchführung eines Kabels 8 weist der Montagestutzen 4 einen durchgehenden Stutzenkanal 40 auf. Am vom zweiten Aussengewinde 42 abgewandten Ende des Montagestutzens 4 geht die Innenfläche 45 in eine geneigte Abstützfläche 44 über. Auf der Abstützfläche 44 sind Strukturelemente 441 angeordnet.

Auf der Abstützfläche 44 kann das Dichtungsteil 3 mit der ersten Druckfläche 33 abgestützt werden. In dieser Ausgestaltung sind an der ersten Druckfläche 33 des Dichtungsteils 3 mehrere Formelemente 331, z.B. Einformungen oder Ausformungen vorzugsweise in gleichem Abstand angeordnet. Die Formelemente 331 sind derart ausgebildet, dass sie zu den Strukturelementen 441 an der Abstützfläche 44 komplementär sind. Entsprechend der Erfindung sind die Formelemente 331 und die Strukturelemente 441 radial oder strahlenförmig verlaufend vorzugsweise je zu einem gemeinsamen Schnittpunkt ausgerichtet.

Das Dichtungsteil 3 weist einen durchgehenden Aufnahmekanal 30, zur Durchführung eines Kabels 8, auf. Der Aufnahmekanal 30 ist durch die Innenfläche 31 des Dichtungsteils 3 begrenzt. An der Innenfläche 31 sind vorzugsweise eines oder mehrere Anpresselemente 311 angeordnet. Die Anpresselemente 311 sind vorzugsweise als Einformungen oder Ausformungen auf der Innenfläche 31 vorgesehen. Fig. 3 zeigt, dass innerhalb des Aufnahmekanals 30 fünf ringförmige Anpresselemente 311 vorgesehen sind.

Auf der der ersten Druckfläche 33 gegenüberliegenden Seite des Dichtungsteils 3 ist eine zweite Druckfläche 32 vorgesehen, die vorzugsweise konisch ausgebildet ist. Die zweite Druckfläche 32 ist durch die konische Innenfläche 22 der Hutmutter 2 mechanisch beaufschlagbar. Die Hutmutter 2 ist durch ein Innengewinde 21 mit dem Aussengewinde 41 des Montagestutzens verbindbar. An einer Schlüsselfläche 23 der Hutmutter 2 ist ein Werkzeug, insbesondere ein Schraubenschlüssel, anlegbar, damit die Kabelverschraubung 1 verschraubt werden kann. Die Hutmutter 2 weist eine durchgehende Durchgangsöffnung 20 auf, welche zumindest teilweise durch die Innenfläche 24 der Hutmutter 2 begrenzt ist. Die Innenfläche 24 geht vorzugweise unterbruchsfrei in die konische Innenfläche 22 über.

Fig. 4 zeigt die in einer Montageöffnung 90 der Montagewand 9 installierte Kabelverschraubung 1 von Fig. 1 in der Ausgestaltung von Fig. 3 mit einem durchgeführten Kabel 8 mit einem Viertelschnitt. Das Kabel 8 mit der Kabelaussenfläche 81 ist durch die Durchführungsöffnung 20 der Hutmutter 2, den Aufnahmekanal 30 des Dichtungsteils 3 und dem Stutzenkanal 40 des Montagestutzens 4 durchgeführt. Die Kabelverschraubung 1 ist mittels eines Montagerings 6, dessen Innengewinde 61 auf das zweite Aussengewinde 42 aufgeschraubt ist, mechanisch stabil an der Montagewand 9 gehalten. Durch den Montagering 6 wird der Dichtungsring 5 gegen die Montagewand 9 gepresst, so dass eine gas- und flüssigkeitsdichte Abdichtung geformt wird. Die Hutmutter 2 ist mit dem Innengewinde 21 mit dem Aussengewinde 42 des Montagestutzens 4 verbunden und drückt mit der konischen Innenfläche 22 gegen die zweite Druckfläche 32 des Dichtungsteils 3. Dadurch wird die mit Formelementen 331 versehene erste Druckfläche 33 des Dichtungsteils 3 gegen die mit Strukturelementen 441 versehene Abstützfläche 44 des Montagestutzens 4 gedrückt, sodass die Formelemente 331 und die Strukturelemente 441 ineinander eingreifen können . Hierdurch sind das Dichtungsteil 3 und der Montagestutzen 4 formschlüssig miteinander verbunden und drehfest gegeneinander gehalten. Die erste Druckfläche 33 und/oder die Abstützfläche 44 können zusätzlich mit einem Klebstoff oder Haftstoff beschichtet sein, welcher das Dichtungsteil 3 und den Montagestutzen 4 zusätzlich kraftschlüssig miteinander verbindet.

### Bezugszeichenliste

- 1: Kabelverschraubung
- 2: Hutmutter
- 20: Durchführungsöffnung
- 21: Innengewinde
- 22: konische Innenfläche
- 23: Schlüsselfläche
- 24: Innenfläche
- 3: Dichtungsteil
- 30: Aufnahmekanal
- 31: Innenfläche
- 311: Anpresselemente
- 32: zweite Druckfläche
- 33: erste Druckfläche
- 331: Formelemente
- 4: Montagestutzen
- 40: Stutzenkanal
- 41: erstes Aussengewinde
- 42: zweites Aussengewinde
- 43: Schlüsselfläche
- 44: Abstützfläche
- 441: Strukturelemente
- 45: Innenfläche
- 5: Dichtungsring
- 6: Montagering
- 7: Klebstoff, Haftstoff
- 61: Innengewinde
- 8: Kabel
- 81: Kabelaussenfläche
- 9: Montagewand
- 90: Montageöffnung

## Patentansprüche

1. Kabelverschraubung (1) zur Durchführung eines Kabels (8) durch eine Montageöffnung (90) in einer Montagewand (9), insbesondere einer Gehäusewand eines elektrischen Geräts oder eines elektrischen Schranks, mit einer Hutmutter (2), einem Dichtungsteil (3) und einem hohlzylinderförmigen Montagestutzen (4),
- der einen der Durchführung des Kabels (8) dienenden Stutzenkanal (40) umfasst,
- der eine Schlüsselfläche (43), zum Anlegen eines Werkzeugs, umfasst,
- der wenigstens ein erstes Aussengewinde (41) aufweist, mittels dessen die Hutmutter (2), die eine der Durchführung des Kabels dienende Durchführungsöffnung (20) aufweist, gehalten ist, und
- der im der Hutmutter (2) zugewandten Endbereich eine konische Abstützfläche (44) aufweist, an die eine erste korrespondierende, konisch verlaufende Druckfläche (33) des Dichtungsteils (3), das zwischen der Hutmutter (2) und dem Montagestutzen (4) angeordnet ist und das einen zur Durchführung des Kabels dienenden Aufnahmekanal (30) aufweist, anliegt,
wobei das Dichtungsteil (3) auf der der ersten Druckfläche (33) gegenüberliegenden Seite eine zweite Druckfläche (32), welche durch die Hutmutter (2) beaufschlagbar ist, aufweist, und wobei die Hutmutter (2) eine konische Innenfläche (22) aufweist, die geometrisch komplementär zur zweiten Druckfläche (32) des Dichtungsteils (3) ausgestaltet ist, **dadurch gekennzeichnet, dass** die Abstützfläche (44) zur Erhöhung der Haft- und Gleitreibung zwischen der ersten Druckfläche (33) des Dichtungsteils (3) und der Abstützfläche (44) als Einformungen, Ausformungen, Rändelung, Wellen, Nuten, Riefen, Rillen, Schuppen und/oder Kuppen ausgebildete Strukturelemente (441) aufweist, welche radial oder strahlenförmig in gleichen Abständen verlaufen, aufweist, und dass das Dichtungsteil (3) im Bereich der ersten Druckfläche (33) Formelemente (331) aufweist, die zu den Strukturelementen (441) komplementär sind.

2. Kabelverschraubung (1) nach Anspruch 1, **dadurch gekennzeichnet, dass** der Montagestutzen (4) ein zweites Aussengewinde (42) aufweist, mit welchem die Kabelverschraubung (1) an einer Montagewand (9), gegebenenfalls mit einem Montagering (6) festschraubbar ist und/oder dass am Montagestutzen (4) Schnellverriegelungselemente, insbesondere Schnappelemente, zur Festlegung der Kabelverschraubung (1) an einer Montagewand (9), angeordnet sind.

3. Kabelverschraubung (1) nach einem der Ansprüche 1 oder 2, **dadurch gekennzeichnet, dass** die Abstützfläche (44) und/oder die Strukturelemente (441) zumindest teilweise mit einer haft- und/oder reibungserhöhenden Beschichtung und/oder einem Klebstoff (7) überzogen sind.

4. Kabelverschraubung (1) nach einem der Ansprüche 1 bis 3, **dadurch gekennzeichnet, dass** die Innenfläche (31) des Dichtungsteils (3) ein oder mehrere Anpresselemente (311) aufweist, die der Verbesserung der Anpressung der Innenfläche (31) gegen die Kabelaussenfläche (81) des Kabels (8) dienen und die Einformungen oder Ausformungen an der Innenfläche (31) bilden und vorzugsweise radial oder ringförmig verlaufen.

5. Kabelverschraubung (1) nach einem der Ansprüche 1 bis 4, **dadurch gekennzeichnet, dass** der Neigungswinkel der Abstützfläche (44) bezüglich der Innenfläche (45) des Montagestutzens (4) zwischen 20° und 75°, vorzugsweise zwischen 25° und 70°, beträgt.

6. Kabelverschraubung (1) nach Anspruch 1, **dadurch gekennzeichnet, dass** die konische Innenfläche (22) mit einer reibungsmindernden Beschichtung überzogen ist.

7. Kabelverschraubung (1) nach Anspruch 1, **dadurch gekennzeichnet, dass** der Neigungswinkel der konischen Innenfläche (22) bezüglich der Innenfläche (24) der Hutmutter (2) zwischen 30° und 80°, vorzugsweise zwischen 40° und 75°, beträgt.

8. Kabelverschraubung (1) nach einem der Ansprüche 1 bis 7, **dadurch gekennzeichnet, dass** der der Neigungswinkel der konischen Innenfläche (22) bezüglich der Innenfläche (24) der Hutmutter (2) grösser ist als der Neigungswinkel der Abstützfläche (44) bezüglich der Innenfläche (45) des Montagestutzens (4).

9. Kabelverschraubung (1) nach einem der Ansprüche 1 bis 8, **dadurch gekennzeichnet, dass** das Dichtungsteil (3) mehrere, zumindest zwei, Aufnahmekanäle (30), zur Durchführung mehrerer Kabel (8), aufweist.

10. Kabelverschraubung (1) nach Anspruch 9, **dadurch gekennzeichnet, dass** das die Aufnahmekanäle (30) unterschiedliche Durchmesser und Formen, zur Durchführung von Kabeln mit unterschiedlichem Durchmesser und unterschiedlicher Formen, aufweisen.

## Claims

1. Cable gland (1) for passing a cable (8) through a mounting opening (90) in a mounting wall (9), in particular a housing wall of an electrical appliance or an electrical cabinet, with a cap nut (2), a sealing member (3) and a hollow cylindrical mounting socket (4),
- which comprises a socket channel (40) for the passage of the cable (8),
- which comprises a spanner flat (43) for the application of a tool,
- which comprises at least a first external thread (41) by means of which the cap nut (2), which comprises a lead-through opening (20) serving for the passage of the cable, is held, and
- which comprises, in the end region facing the cap nut (2), a conical support surface (44) against which a first corresponding conically extending pressure surface (33) of the sealing member (3), which is arranged between the cap nut (2) and the mounting socket (4) and which comprises a receiving channel (30) serving for the passage of the cable, abuts,
wherein the sealing member (3) comprises, on the side opposite the first pressure surface (33), a second pressure surface (32) which can be acted upon by the cap nut (2), and wherein the cap nut (2) comprises a conical inner surface (22) which is geometrically complementary to the second pressure surface (32) of the sealing member (3),
**characterised in**
**that** in order to increase the static and sliding friction between the first pressure surface (33) of the sealing member (3) and the support surface (44) the support surface (44) comprises structural elements (441) in the form of recesses, protrusions, knurling, corrugations, grooves, scores, creases, scales and/or ridges, which extend radially or beam-shaped at equal intervals, and that the sealing member (3) comprises in the region of the first pressure surface (33) form elements (331) which are complementary to the structural elements (441).

2. Cable gland (1) according to claim 1, **characterised in that** the mounting socket (4) comprises a second external thread (42) with which the cable gland (1) can be screwed tightly to a mounting wall (9), if appropriate with a mounting ring (6), and/or **in that** quick-locking elements, in particular snap-on elements, are arranged on the mounting socket (4) for fixing the cable gland (1) to a mounting wall (9).

3. Cable gland (1) according to claim 1 or 2, **characterised in that** the support surface (44) and/or the structural elements (441) are at least partially coated with an adhesion and/or friction enhancing coating and/or an adhesive (7).

4. Cable gland (1) according to one of the claims 1 to 3, **characterised in that** the inner surface (31) of the sealing member (3) comprises one or more press-on elements (311) which serve to improve the pressing of the inner surface (31) against the outer cable surface (81) of the cable (8) and which form recesses or protrusions on the inner surface (31) and preferably extend radially or annularly.

5. Cable gland (1) according to one of the claims 1 to 4, **characterised in that** the angle of inclination of the support surface (44) with respect to the inner surface (45) of the mounting socket (4) is between 20° and 75°, preferably between 25° and 70°.

6. Cable gland (1) according to claim 1, **characterised in that** the conical inner surface (22) is coated with a friction-reducing coating.

7. Cable gland (1) according to claim 1, **characterised in that** the angle of inclination of the conical inner surface (22) with respect to the inner surface (24) of the cap nut (2) is between 30° and 80°, preferably between 40° and 75°.

8. Cable gland (1) according to one of the claim 1 to 7, **characterised in** in which the angle of inclination of the conical inner surface (22) with respect to the inner surface (24) of the cap nut (2) is greater than the angle of inclination of the support surface (44) with respect to the inner surface (45) of the mounting socket (4).

9. Cable gland (1) according to one of the claims 1 to 8, **characterised in that** the sealing member (3) comprises several, at least two, receiving channels (30) for the passage of several cables (8).

10. Cable gland (1) according to claim 9, **characterised in that** the receiving channels (30) comprise different diameters and shapes for the passage of cables with different diameters and shapes.

## Revendications

1. Presse-étoupe (1) pour faire passer un câble (8) à travers une ouverture de montage (90) dans une paroi de montage (9), en particulier une paroi de boîtier d'un appareil électrique ou d'une armoire électrique, avec un écrou borgne (2), un élément d'étanchéité (3) et une douille de montage cylindrique creuse (4),
- qui comprend un canal de douille (40) servant au passage du câble (8),
- qui comprend une surface de clé (43), pour l'application d'un outil,
- qui présente au moins un premier filetage extérieur (41) au moyen duquel l'écrou borgne (2), qui présente une ouverture de passage (20) servant au passage du câble, est maintenu, et
- qui présente, dans la zone d'extrémité orientée vers l'écrou borgne (2), une surface d'appui conique (44) contre laquelle s'applique une première surface de pression (33) correspondante, s'étendant de manière conique, de l'élément d'étanchéité (3) qui est disposé entre l'écrou borgne (2) et la douille de montage (4) et qui présente un canal de réception (30) servant au passage du câble,
où l'élément d'étanchéité (3) présente, sur le côté opposé à la première surface de pression (33), une deuxième surface de pression (32) qui peut être sollicitée par l'écrou borgne (2), et où l'écrou borgne (2) présente une surface intérieure conique (22) qui est configurée de manière géométriquement complémentaire à la deuxième surface de pression (32) de l'élément d'étanchéité (3), **caractérisé en ce que**
pour augmenter le frottement statique et de glissement entre la première surface de pression (33) de l'élément d'étanchéité (3) et la surface d'appui (44), la surface d'appui (44) comprend des éléments structurels (441) sous la forme d'évidements, de saillies, de moletages, d'ondulations, de rainures, d'entailles, de plis, d'écailles et/ou de nervures, qui s'étendent radialement ou en forme de poutre à intervalles réguliers, et que l'élément d'étanchéité (3) comprend dans la région de la première surface de pression (33) des éléments de forme (331) qui sont complémentaires aux éléments structurels (441) .

2. Presse-étoupe (1) selon la revendication 1, **caractérisé en ce que** la douille de montage (4) présente un deuxième filetage extérieur (42) avec lequel la presse-étoupe (1) peut être vissée sur une paroi de montage (9), le cas échéant avec une bague de montage (6), et/ou **en ce que** des éléments de verrouillage rapide, en particulier des éléments d'encliquetage, sont disposés sur la douille de montage (4) pour fixer la presse-étoupe (1) sur une paroi de montage (9).

3. Presse-étoupe (1) selon la revendication 1 ou 2, **caractérisé en ce que** la surface d'appui (44) et/ou les éléments structurels (441) sont au moins partiellement recouverts d'un revêtement augmentant l'adhérence et/ou augmentant le frottement et/ou d'un adhésif (7).

4. Presse-étoupe (1) selon une des revendications 1 - 3, **caractérisé en ce que** la surface intérieure (31) de l'élément d'étanchéité (3) présente un ou plusieurs éléments de pression (311) qui servent à améliorer la pression de la surface intérieure (31) contre la surface extérieure (81) du câble (8) et qui forment des creux ou des bosses sur la surface intérieure (31) et s'étendent de préférence de manière radiale ou annulaire.

5. Presse-étoupe (1) selon une des revendications 1 - 4, **caractérisé en ce que** l'angle d'inclinaison de la surface d'appui (44) par rapport à la surface intérieure (45) de la douille de montage (4) est compris entre 20° et 75°, de préférence entre 25° et 70°.

6. Presse-étoupe (1) selon la revendication 1, **caractérisé en ce que** la surface intérieure conique (22) est recouverte d'un revêtement réduisant la friction.

7. Presse-étoupe (1) selon la revendication 1, **caractérisé en ce que** l'angle d'inclinaison de la surface intérieure conique (22) par rapport à la surface intérieure (24) de l'écrou borgne (2) est compris entre 30° et 80°, de préférence entre 40° et 75°.

8. Presse-étoupe (1) selon une des revendications 1 - 7, **caractérisé en ce que** l'angle d'inclinaison de la surface intérieure conique (22) par rapport à la surface intérieure (24) de l'écrou borgne (2) est plus grand que l'angle d'inclinaison de la surface d'appui (44) par rapport à la surface intérieure (45) de la douille de montage (4).

9. Presse-étoupe (1) selon une des revendications 1 - 8, **caractérisé en ce que** l'élément d'étanchéité (3) présente plusieurs, au moins deux, canaux de réception (30) pour le passage de plusieurs câbles (8).

10. Presse-étoupe (1) selon la revendication 9, **caractérisé en ce que** les canaux de réception (30) présentent différents diamètres et différentes formes, pour le passage de câbles de différents diamètres et différentes formes.
